(19) Europäisches Patentamt
European Patent Office
Office européen des brevets

(11) EP 2 550 314 B1

(12) EUROPÄISCHE PATENTSCHRIFT

(45) Veröffentlichungstag und Bekanntmachung des Hinweises auf die Patenterteilung:
**18.05.2016 Patentblatt 2016/20**

(21) Anmeldenummer: **11711821.6**

(22) Anmeldetag: **24.03.2011**

(51) Int Cl.:
***C08G 65/26*** *(2006.01)*

(86) Internationale Anmeldenummer:
**PCT/EP2011/054510**

(87) Internationale Veröffentlichungsnummer:
**WO 2011/117332 (29.09.2011 Gazette 2011/39)**

(54) **VERFAHREN ZUR HERSTELLUNG VON POLYETHERCARBONATPOLYOLEN**

METHOD FOR PRODUCING POLYETHER CARBONATE POLYOLS

PROCÉDÉ DE PRODUCTION DE POLYÉTHERCARBONATE POLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2010 DE 102010012450**

(43) Veröffentlichungstag der Anmeldung:
**30.01.2013 Patentblatt 2013/05**

(73) Patentinhaber: **Covestro Deutschland AG**
**51373 Leverkusen (DE)**

(72) Erfinder:
- **GÜRTLER, Christoph**
  **50676 Köln (DE)**
- **HOFMANN, Jörg**
  **47800 Krefeld (DE)**
- **MÜLLER, Thomas Ernst**
  **81827 München (DE)**
- **WOLF, Aurel**
  **42489 Wülfrath (DE)**
- **GRASSER, Stefan**
  **51377 Leverkusen (DE)**
- **KÖHLER, Burkhard**
  **34289 Zierenberg (DE)**

(74) Vertreter: **Levpat**
**c/o Covestro AG**
**Alfred-Nobel-Straße 10**
**40789 Monheim am Rhein (DE)**

(56) Entgegenhaltungen:
**EP-A1- 2 112 187**
**WO-A1-2004/087788**
**WO-A1-2006/103214**
**WO-A1-2008/092767**
**WO-A1-2010/028362**
**US-A- 4 500 704**
**US-A1- 2003 149 232**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 550 314 B1

## Beschreibung

Die vorliegende Erfindung betrifft ein Verfahren gemäß den Ansprüchen 1-15 zur Herstellung von Polyethercarbonatpolyolen durch katalytische Copolymerisation von Kohlendioxid ($CO_2$) mit Alkylenoxiden in Gegenwart einer oder mehrerer H-funktionellen Startersubstanzen mit Hilfe von Doppelmetallcyanid (DMC)-Katalysatoren und in Gegenwart von Additiven.

Die Herstellung von Polyethercarbonatpolyolen durch katalytische Anlagerung von Alkylenoxiden (Epoxiden) und Kohlendioxid in An- oder Abwesenheit von an H-funktionellen Startersubstanzen (Startern) wird) wurde seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Starterverbindung ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie-die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

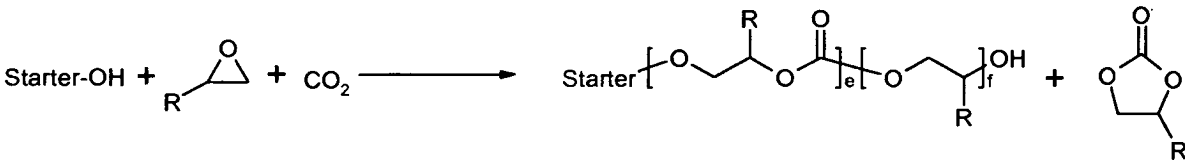

(I)

US 4,500,704 beschreibt den Einsatz von DMC-Katalysatoren zur Copolymerisation von Epoxiden und Kohlendioxid. Der DMC-Katalysator wird in wässrigem Medium hergestellt und enthält daher viel Wasser. Um den Katalysator zu aktivieren, wird das Wasser bis zu einer Menge von weniger als 5 Gew.-% entfernt. Nach der Lehre von US 4,500,704 ist die teilweise Entfernung von Wasser sowie eine Erhöhung der Aktivität des Katalysators dadurch möglich, dass der Katalysator mit organischen Komplexbildnern oder Koordinationsverbindungen wie Alkohole, Ether, Ester, Sulfide, Ketone, Aldehyde, Amide und/oder Nitrile behandelt wird. Werden die DMC-Katalysatoren in Gegenwart dieser Verbindungen hergestellt, so sollen diese 5-30 Gew.-% der Gesamtmasse des Katalysators ausmachen. US 4,500,704 offenbart aber nicht, dass derartige Verbindungen als Additive bei der Copolymerisation von Epoxiden mit Kohlendioxid eingesetzt werden können.

WO-A 2004/087788 beschreibt die Herstellung von Polyethercarbonatpolyolen mit enger Polydispersität unter Verwendung von DMC-Katalysatoren, die dadurch erreicht wird, dass ein sterisch gehindertes Kettenübertragungsreagens zugegeben wird, das fähig ist, die wachsende Polymerkette zu protonieren. Als sterisch gehinderte Kettenübertragungsreagentien werden genannt: sterisch gehinderte Alkohole (z.B. tert.-Butanol oder substituierte tert.-Butanole), tertiäre aliphatische Alkohole, sterisch gehinderte Phenole (z.B. di-tert.-Butylphenol oder substituierte di-tert.-Butylphenole), sterisch gehinderte, polysubstituierte Phenole und sterisch gehinderte Benzoesäure-Derivate (z.B. di-tert.-Butyl-Benzoesäure oder substituierte di-tert.-Butyl-Benzoesäuren). Die sterisch gehinderte Kettenübertragungsreagentien können zu Beginn der Reaktion oder während der Polymerisation zugegeben werden, bevorzugt in mindestens 10-fachem molaren Überschuss relativ zum DMC-Katalysator. In Beispiel 1 wurden 6 mmol tert.-Butanol und 0,026 mmol Zn im Katalysator eingesetzt, woraus ein Verhältnis Additiv/Katalysator von 230 resultiert. Die Anzahl der Zn-Zentren in einem mol DMC-Katalysator ist nicht offenbart. Nachteilig ist die relativ zur Menge des DMC-Katalysators große Menge an zugesetztem sterisch gehinderten Kettenübertragungsreagens.

Es war daher Aufgabe der vorliegenden Erfindung, ein Verfahren zur Herstellung von Polyethercarbonatpolyolen bereitzustellen, welches eine günstige Selektivität (d.h. niedriges Verhältnis von cyclischem Carbonat zu linearem Polyethercarbonat) und gleichzeitig eine kurze Aktivierungszeit aufweist.

Überraschend wurde gefunden, dass die zuvor genannte Aufgabe gelöst wird durch ein Verfahren gemäß Anspruch 1 zur Herstellung von Polyethercarbonatpolyolen aus einer oder mehreren H-funktionellen Startsubstanzen, eines oder mehrerer Alkylenoxiden und Kohlendioxid in Gegenwart eines DMC-Katalysators und in Gegenwart von wenigstens eines Additivs A), dadurch gekennzeichnet, dass

($\alpha$) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur

und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere Alkylenoxide und Kohlendioxid zu der aus Schritt (β) resultierenden Mischung fortwährend dosier werden ("Copolymerisation"), wobei die für die Copolymerisation eingesetzten Alkylenoxide gleich oder verschieden sein können von den bei der Aktivierung eingesetzten Alkylenoxiden,

wobei das Additiv A) in Schritt (α) der H-funktionellen Startersubstanz oder dem Gemisch von mindestens zwei H-funktionellen Startersubstanzen, gegebenenfalls vor oder nach der Trocknung, und/oder das Additiv A) in Schritt (β) der Teilmenge von einem oder mehreren Alkylenoxiden zu der aus Schritt (α) resultierenden Mischung zugesetzt werden, und wobei das Additiv A) mindestens eine Verbindung ausgewählt aus der Gruppe bestehend aus sterisch ungehinderten Phenolen, Catecholen, Brenzcatecholen, Phenothiazinen, Benzothiazolen, Phenoxazine, 2,2,6,6,-Tetramethylpiperidin-1-oxyl und Nitrostyrolen ist.

Bei dem Schritt der Aktivierung wird eine Teilmenge Alkylenoxidverbindung, gegebenenfalls in Gegenwart von $CO_2$, zum DMC-Katalysator gegeben, wobei aufgrund einer folgenden exothermen chemischen Reaktion eine Temperaturspitze ("Hotspot") und/oder ein Druckabfall im Reaktor beobachtet wird. Bei dem Schritt der Aktivierung des erfindungsgemäßen Verfahrens kann die Teilmenge Alkylenoxidverbindung auch ein oder mehrere Additiv A) enthalten, und der DMC-Katalyator kann mit einem oder mehrerer Additive A) und gegebenenfalls mit einem oder mehreren Metallsalz vermischt werden. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators, gegebenenfalls ein oder mehreredes Additive A) und gegebenenfalls ein oder mehrere Metallsalze und gegebenenfalls des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

Als Additiv A) kommen sterisch ungehinderte Phenole (A-1) gemäß Formel (II) in Betracht,

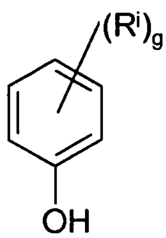

(II)

wobei

g = 0, 1, 2, bevorzugt 1 oder 2 ist und
$R^i$ für eine Amino-, Bromo-, Chloro-, Cyano-, Iodo-, Methoxy-, Methyl- oder Nitrogruppe, vorzugsweise für eine Nitrogruppe steht
Vorzugsweise sind der oder die Substituenten $R^i$ in der ortho-Position relativ zur Hydroxygruppe angeordnet. Besonders bevorzugt handelt es sich bei den sterisch ungehinderten Phenolen um 4-Dinitrophenol und/oder 2,4-Dinitrophenol.

Als Additiv A) kommen auch Catechole gemäß Formel (IIIa) und Brenzcatechole gemäß Formel (IIIb) in Betracht,

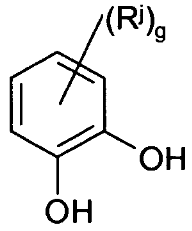

(IIIa)

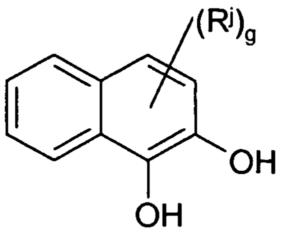

(IIIb)

wobei

g die oben genannte Bedeutung hat und
$R^j$ für eine Acetamido-, Amino-, Bromo-, n-Butyl-, iso-Butyl-, tert.-Butyl-, Chloro-, Cyano-, Ethoxy-, Ethyl-, Fluoro-, Iodo-, Methoxy-, Methyl-, Nitro-, iso-Propyl-, n-Propylgruppe steht. Vorzugsweise handelt es sich bei den Brenzcatecholen um 4-tert-Butyl-Brenzcatechol.

Als Additiv A) Kommen auch Phenothiazine gemäß Formel (IVb) in Betracht,

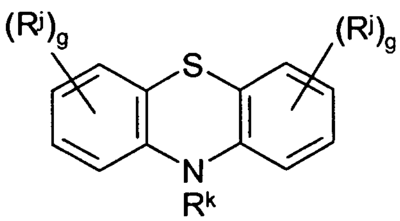

(IVb)

wobei

g und $R^j$ die oben genannte Bedeutung haben, und
$R^k$ für eine H oder eine $C_1$ - $C_{20}$-Alkylgruppe, vorzugsweise für H oder eine Methyl-, Ethyl-, iso-Propyl-, n-Propyl-, n-Butyl-, iso-Butyl-, tert.-Butyl-, Hexyl-, Cyclohexylgruppe steht.

Als Additiv A) kommen auch Benzothiazole gemäß Formel (Vb) in Betracht,

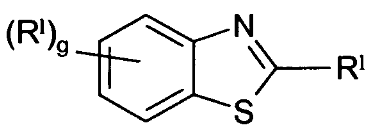

(Vb)

wobei

g die oben genannte Bedeutung hat, und.
$R^1$ für eine H, $C_1$ - $C_{20}$-Alkylgruppe (beispielsweise Methyl-, Ethyl-, iso-Propyl-, n-Propyl-, n-Butyl-, iso-Butyl-, tert.-Butyl-, Hexyl-, Cyclohexylgruppe), Acetamido-, Amino-, Bromo-, Chloro-, Cyano-, Ethoxy-, Ethyl-, Fluoro-, Hydroxy-, Iodo-, Methoxy-, Nitrogruppe steht. Desweiteren ist es möglich, dass die Benzothiazol-Fragmente über Disulfidbrücken miteinander verknüpft sind.

Als Additiv A) kommen auch Phenoxazine gemäß Formel (VIb) in Betracht,

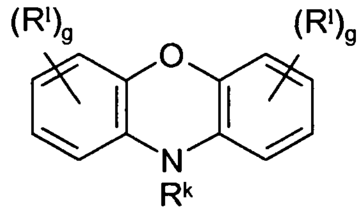

(VIb)

wobei

g, $R^k$ und $R^j$ die oben genannte Bedeutung haben.

Als Additiv A) kommen auch Nitrostyrole wie beispielsweise α-Nitrostyrol oder β-Nitrostyrol, besonders bevorzugt trans-β-Nitrostyrol in Betracht.

Überraschend wurde weiterhin gefunden, dass eine günstige Selektivität (d.h. niedriges Verhältnis von cyclischem Carbonat zu linearem Polyethercarbonat), eine kurze Aktivierungszeit und gleichzeitig ein hoher Gehalt an eingebautem $CO_2$ im resultierenden Polyethercarbonatpolyol erreicht wird durch ein Verfahren zur Herstellung von Polyethercarbonatpolyolen aus einer oder mehrerer H-funktionellen Startsubstanzen, eines oder mehrerer Alkylenoxiden und Kohlendioxid in Gegenwart eines DMC-Katalysators und in Gegenwart von wenigstens einem der Additive A) sowie in Gegenwart von wenigstens einem Metallsalz B), dadurch gekennzeichnet, dass

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere Alkylenoxide und Kohlendioxid zu der aus Schritt (β) resultierenden Mischung zugesetzt werden ("Copolymerisation"), wobei die für die Copolymerisation eingesetzten Alkylenoxide gleich oder verschieden sein können von den bei der Aktivierung eingesetzten Alkylenoxiden,

wobei das Additiv A) in Schritt (α) der H-funktionellen Startersubstanz oder dem Gemisch von mindestens zwei H-funktionellen Startersubstanzen, gegebenenfalls vor oder nach der Trocknung, und/oder das Additiv A) in Schritt (β) der Teilmenge von einem oder mehreren Alkylenoxiden zu der aus Schritt (α) resultierenden Mischung zugesetzt werden, wobei das Metallsalz B) in Schritt (α) der H-funktionellen Startersubstanz oder dem Gemisch von mindestens zwei H-funktionellen Startersubstanzen vor oder nach der Trocknung (gegebenenfalls gemeinsam mit Additiv A) zugesetzt wird, wobei als Metallsalz B) mindestens eine Verbindung ausgewählt aus der Gruppe bestehend aus Erdalkalihalogeniden (wie beispielsweise Magnesiumchlorid), Erdalkalicarboxylaten (wie beispielsweise Magnesiumacetat, Calciumacetat, Magnesiumstearat, Calciumstearat) oder Aluminiumcarboxylaten (wie beispielsweise Aluminiumstearat) eingesetzt wird.

Erdalkalimetalle im Sinne der Erfindung sind die Elemente der Gruppe 2 des Periodensystems der Elemente und umfassen die Elemente Beryllium (Be), Magnesium (Mg), Calcium (Ca), Strontium (Sr), Barium (Ba) und Radium (Ra).

Halogenide sind die Anionen der Elemente der Gruppe 17 des Periodensystems der Elemente und umfassen die Anionen Fluorid, Chlorid, Bromid, Iodid und Astatin.

Carboxylate im Sinne dieser Erfindung sind Anionen von Carbonsäuren, die wenigstens eine Carboxylatgruppe enthalten.

Die Carboxylate weisen beispielsweise nur eine Carboxylatgruppe gemäß Formel (VII) auf,

$R^1$-$COO^-$ (VII)

wobei $R^1$ für H, $C_1$ bis $C_{30}$-Alkyl (wie beispielsweise $CH_3$, $CH_3$-$CH_2$, $CH_3$-$CH_2$-$CH_2$, $CH_3$-$(CH_2)_3$, $CH_3$-$(CH_2)_4$, $CH_3$-$(CH_2)_5$, $CH_3$-$(CH_2)_6$, $CH_3$-$(CH_2)_7$, $CH_3$-$(CH_2)_8$, $CH_3$-$(CH_2)_{14}$ , $CH_3$-$(CH_2)_{16}$ bzw. deren verzweigte Isomere), $C_7$ bis $C_{30}$-Alkaryl (wie beispielsweise Benzyl) oder $C_6$ bis $C_{30}$-Aryl (wie beispielsweise Phenyl oder Naphthyl) steht. Ebenso kann es sich bei den Carboxylaten um ungesättigte Carboxylate handeln wie beispielsweise Acrylat, Methacrylat und ungesättigte Fettsäure-Salze wie Oleat (Salz der Ölsäure) mit $R^1$ = $CH_3$-$(CH_2)_7$-CH=CH-$(CH_2)_7$, Linolat (Salz der Linolsäure) mit $R^1$ = $CH_3$-$(CH_2)_4$-CH=CH-$CH_2$-CH=CH-$(CH_2)_7$ sowie Linolenat (Salz der Linolensäure) mit $R^1$ = $CH_3$-$CH_2$-CH=CH-$CH_2$-CH=CH-$CH_2$-CH=CH-$(CH_2)_7$.
$R^1$ in Formel (II) kann auch heteroaromatisch sein wie beispielsweise im Falle von Nicotinoat.

Die Carboxylate können auch beispielsweise zwei Carboxylatgruppen gemäß Formel (VIII) aufweisen,

$$^{-}OOC\text{-}R^2\text{-}COO^{-} \qquad \text{(VIII)}$$

wobei $R^2$ für eine Einfachbindung (im Falle von Oxalat), $C_1$ bis $C_{30}$-Alkylen (wie beispielsweise $CH_2$, $CH_2$-$CH_2$, ($(CH_2)_3$, $(CH_2)_4$, $(CH_2)_5$, $(CH_2)_6$, $(CH_2)_7$, -CH=CH- (im Falle von Maleat oder Fumarat)), $C_7$ bis $C_{30}$-Alkaryl (wie beispielsweise Benzyl) oder $C_6$ bis $C_{30}$-Aryl (wie beispielsweise Phenyl oder Naphthyl) steht.

Die Carboxylate können darüber hinaus noch mit Heteroatomen (wie beispielsweise Halogenen wie Fluor, Chlor, Brom, Iod) und/oder mit einer oder mehreren funktionellen Gruppen wie Hydroxyl (-OH), Amin (primäre Aminogruppe -$NH_2$, sekundäre Aminogruppe -NH oder tertiäre Aminogruppe - N) oder Thiol (-SH) substituiert sein. Beispiele von solchen Carboxylaten sind die Salze der Hydroxycarbonsäuren wie Glykolat (Salz der Glykolsäure), Lactat (Salz der Milchsäure), Tartrat (Salz der Weinsäure), Salicylat (Salz der Salicylsäure). Weitere Beispiele sind die Salze der Aminosäuren wie die Salze von Alanin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin und Valin. Weitere Beispiele sind die Salze der Carbonsäuren mit Thiolgruppe wie beispielsweise die Salze der 2-Mercaptopropionsäure. Beispiel für Carboxylate mit zwei funktionellen Gruppen sind die Salze des Cysteins (enthaltend eine Aminogruppe und eine Thiolgruppe).

Bevorzugt eingesetzt werden als Additiv A) die zuvor genannten sterisch ungehindeten Phenole (wie beispielsweise 4-Dinitrophenol und/oder 2,4-Dinitrophenol) und als Metallsalz B) Erdalkalicarboxylate (wie beispielsweise Magnesiumacetat, Calciumacetat, Magnesiumstearat, Calciumstearat) oder Aluminiumcarboxylate (wie beispielsweise Aluminiumstearat). Besonders bevorzugt wird als Additiv A) 2,4-Dinitrophenol und/oder 4-Nitrophenol eingesetzt, und als Metallsalz B) Calciumstearat und/oder Aluminiumstearat.

Für die Angabe der Menge an eingesetztem Additive A) und ggf. der Metallsalze B) wird das Verhältnis der eingesetzten Stoffmenge des Additivs A) bzw. des Metallsalzes B) (bzw. der Summe der jeweils eingesetzten Stoffmengen) bezogen auf die eingesetzte Stoffmenge an Cobalt stammend aus dem DMC-Katalysator (angegeben als [mmol Additiv A] / [mmol Co] bzw. [mmol Metallsalz B] / [mmol Co]) zugrunde gelegt.

Im Allgemeinen können die Additive A) in einer Gesamtmenge von 0,2 bis 10,0 [mmol Additiv A)] / [mmol Co] eingesetzt werden. Vorzugsweise werden die Additive A) in einer Gesamtmenge von 0,8 bis 4,0 [mmol Additiv A)] / [mmol Co], besonders bevorzugt in einer Gesamtmenge von 1,2 bis 3,0 [mmol Additiv A)] / [mmol Co] eingesetzt.

Im Allgemeinen können die Metallsalze B) jeweils in einer Gesamtmenge von 0,0 bis 10,0 [mmol Metallsalz B)] / [mmol Co] eingesetzt werden. Vorzugsweise werden die Metallsalze B) in einer Gesamtmenge von 0,8 bis 4,0 [mmol Metallsalz B)] / [mmol Co], besonders bevorzugt in einer Gesamtmenge von 1,2 bis 3,0 [mmol Metallsalz B)] / [mmol Co] eingesetzt.

Zu Schritt ($\alpha$):

Zur Herstellung von Polyethercarbonatpolyolen durch katalytische Anlagerung von Alkylenoxiden (Epoxiden) und Kohlendioxid an H-funktionelle Startersubstanzen (Starter) in Gegenwart der erfindungsgemäßen DMC-Katalysatoren und ggf. einem oder mehreren Additiven A) und ggf. von einem oder mehreren Metallsalzen B) wird die H-funktionelle Startersubstanz oder ein Gemisch aus mindestens zwei H-funktionellen Startersubstanzen vorgelegt und gegebenenfalls Wasser und/oder andere leicht flüchtige Verbindungen entfernt. Dies erfolgt beispielsweise durch Strippen mittels Stickstoff (ggf. unter vermindertem Druck) oder durch Destillation unter Vakuum bei Temperaturen von 50 bis 200°C, bevorzugt 80 bis 160°C, besonders bevorzugt bei 100 bis 140°C. Diese Vorbehandlung der Startersubstanz oder des Gemisches der Startersubstanzen wird im Folgenden vereinfacht als Trocknung bezeichnet.

Dabei kann der DMC-Katalysator sowie ein oder mehrere Additiven A) und ggf. ein oder mehrere Metallsalze B) bereits in der H-funktionellen Startersubstanz oder dem Gemisch von mindestens zwei H-funktionellen Startersubstanzen vorgelegt sein, es ist jedoch auch möglich, den dann getrockneten DMC-Katalysator, ein oder mehrere Additiven A) und ggf. das optional getrocknete Metallsalz B) erst nach der Trocknung der H-funktionellen Startersubstanz oder dem Gemisch der H-funktionellen Startersubstanzen zuzusetzen. Der DMC-Katalysator kann in fester Form oder als

Suspension in einer H-funktionellen Startersubstanz zugegeben werden. Wird der Katalysator als Suspension zugegeben, wird diese bevorzugt vor der Trocknung der H-funktionellen Startersubstanz(en) zugefügt.

Zu Schritt (β):

Vorzugsweise erfolgt die Aktivierung (β) derart, dass

(β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β2) in einem zweiten Aktivierungsschritt nach der im vorangegangenen Aktivierungsschritt erreichten Temperaturspitze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,

(β3) gegebenenfalls in einem dritten Aktivierungsschritt bzw. weiteren Aktivierungsschritten nach der im vorangegangenen Aktivierungsschritt erreichten Temperaturspitze der Schritt (β2) null bis fünfmal, bevorzugt ein bis viermal, besonders bevorzugt genau einmal wiederholt wird, wobei diese Zugabe der Teilmenge bzw. Zugaben der Teilmengen an Alkylenoxid unter Abwesenheit von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(β4) gegebenenfalls in einem weiteren Aktivierungsschritt bzw. weiteren Aktivierungsschritten nach der im vorangegangenen Aktivierungsschritt erreichten Temperaturspitze der Schritt (β3) ein bis fünfmal, bevorzugt ein bis viermal, besonders bevorzugt genau einmal wiederholt wird, wobei diese Zugabe der Teilmenge bzw. Zugaben der Teilmengen an Alkylenoxid in Gegenwart von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird.

Es ist auch möglich, das Additiv A) in der jeweils in den Schritten (β1) bis (β4) eingesetzten Teilmenge von einem oder mehreren Alkylenoxiden zu lösen und dem Verfahren zuzuführen.

In einer bevorzugten Ausführungsform beträgt die bei der Aktivierung in den Schritten β1 bis β4 jeweils eingesetzte Teilmenge von einem oder mehreren Alkylenoxiden 2,0 bis 15,0 Gew.-%, bevorzugt 2,5 bis 14,0 Gew.-%, besonders bevorzugt 3,0 bis 13,0 Gew.-% (bezogen auf die Gesamtmenge der bei der Aktivierung und Copolymerisation eingesetzten Menge an Alkylenoxiden).

Die Dosierung eines oder mehrerer Alkylenoxide und gegebenenfalls des Kohlendioxids erfolgt nach der Trocknung einer Startersubstanz oder der Mischung mehrerer Startersubstanzen und der Zugabe des DMC-Katalysators und/oder des Additivs A) und ggf. des Metallsalzes B), die vor oder nach der Trocknung der Startersubstanz als Feststoff oder im Falle des DMC-Katalysators in Form einer Suspension zugegeben wird. Wird der DMC-Katalysator und/oder das Additiv A) und ggf. das Metallsalz B) nach der Trocknung der Startersubstanz zugegeben, so sollte dieser DMC-Katalysator und/oder das Metallsalz B) vorzugsweise getrocknet sein, beispielsweise in einem analogen Verfahren wie die Trocknung der Startersubstanz. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck(absolut) zwischen 10 mbar bis 10 bar, vorzugsweise 100 mbar bis 8 bar und bevorzugt 500 mbar bis 6 bar eingestellt wird. In einer besonders bevorzugten Ausführungsform wird das aus Schritt (α) resultierende Gemisch aus einer oder mehrerer Starterverbindungen und dem DMC-Katalysator bei einer Temperatur von 100°C bis 130°C mindestens einmal, vorzugsweise dreimal mit 1,5 bar bis 10 bar (absolut), besonders bevorzugt 3 bar bis 6 bar (absolut) eines Inertgases (Stickstoff oder ein Edelgas wie beispielsweise Argon) beaufschlagt und jeweils unmittelbar anschließend bis innerhalb von 15 min wird der Überdruck auf 1 bar (absolut) reduziert. Alternativ wird in einer ebenfalls besonders bevorzugten Ausführungsform in das aus Schritt (α) resultierende Gemisch bei einer Temperatur von 40°C

bis 150°C Inertgas (Stickstoff oder ein Edelgas wie beispielsweise Argon) eingeleitet und gleichzeitig ein reduzierter Druck (absolut) von 10 mbar bis 800 mbar, besonders bevorzugt von 50 mbar bis 200 mbar angelegt.

Zu Schritt (γ):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen (Zugaben) erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren. Die Konzentration an freien Alkylenoxiden während der Reaktion in der Reaktionsmischung beträgt vorzugsweise > 0 bis 40 Gew.%, besonders bevorzugt > 0 - 25 Gew-%, höchst bevorzugt >0-15 Gew.-% (jeweils bezogen auf das Gewicht der Reaktionsmischung).

Vorzugsweise wird ein Überschuss an Kohlendioxid bezogen auf die berechnete Menge an eingebautem Kohlendioxid im Polyethercarbonatpolyol eingesetzt, d a bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 1 bis 120 bar, bevorzugt 50 bis 110 bar, besonders bevorzugt von 70 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 110 bis 120°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

Besonders bevorzugte Reaktoren sind: Rohrreaktor, Rührkessel und Schlaufenreaktor. Polyethercarbonatpolyole können in einem Rührkessel hergestellt werden, wobei der Rührkessel je nach Ausführungsform und Betriebsweise über den Reaktormantel, innenliegende und/oder in einem Umpumpkreislauf befindliche Kühlflächen gekühlt werden kann. Aus Sicherheitsgründen sollte der Gehalt an freiem Epoxid 15 Gew.-% im Reaktionsgemisch des Rührkessels nicht übersteigen (siehe beispielsweise WO-A 2004/081082; Seite 3; Zeile 14). Sowohl in der semi-batch Fahrweise, wo das Produkt erst nach Ende der Reaktion entnommen wird, als auch in der kontinuierlichen Fahrweise, wo das Produkt kontinuierlich entnommen wird, ist daher besonders auf die Dosiergeschwindigkeit des Epoxids zu achten. Sie ist so einzustellen, dass trotz der inhibierenden Wirkung des Kohlendioxids das Epoxid genügend schnell abreagiert. Es ist möglich, das Kohlendioxid kontinuierlich oder diskontinuierlich zuzuführen. Dies hängt davon ab, ob das Epoxid schnell genug verbraucht wird und ob das Produkt gegebenenfalls $CO_2$-freie Polyether-Blöcke enthalten soll. Die Menge des Kohlendioxids (angegeben als Druck) kann bei der Zugabe des Epoxids ebenso variieren. Es ist möglich, während der Zugabe des Epoxids den CO2-Druck allmählich zu steigern oder zu senken oder gleich zu lassen.

Eine weitere mögliche Ausführungsform im Rührkessel für ist die Copolymerisation (Schritt γ) ist dadurch gekennzeichnet, dass eine oder mehrere H-funktionellen Starterverbindungen während der Reaktion kontinuierlich in den Reaktor zudosiert werden, wobei das eingesetzte Additiv A) und das gegebenenfalls eingesetzte Metallsalz B) gemeinsam mit dem Starter dem Verfahren zugeführt werden kann oder bereits zu Beginn der Reaktion vollständig vorgelegt werden.. Die Menge der H-funktionellen Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Starterverbindungen)kontinuierliche Zugabe des Starters (continuous addition of starter; CAOS-Verfahren). Es ist jedoch nicht notwendig, den Starter portionsweise zuzugeben. Er kann auch bereits zu Beginn der Reaktion vollständig vorgelegt sein.

Die aktivierte Katalysator-Starter-Mischung kann im Rührkessel, aber auch in einem anderen Reaktionsbehältnis (Rohrreaktor oder Schlaufenreaktor) mit Epoxid und Kohlendioxid (weiter) copolymerisiert werden.

Beim Rohrreaktor werden aktivierter Katalysator und Starter sowie Epoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner überkritischen Form, also quasi flüssig, zudosiert, um eine bessere Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die. Häufig ist es nämlich apparativ nicht möglich, turbulente Strömungsverhältnisse mit guter Durchmischung und Wärmeabfuhr verbessern..

Selbst Schlaufenreaktoren können zur Herstellung von Polyethercarbonatpolyolen verwendet werden. Hierunter fallen im Allgemeinen ReaktorenDiese sind Rohrreaktoren mit Stoffrückfiihrttng, wie beispielsweise ein Strahlschlaufenreaktor, der auch kontinuierlich betrieben werden kann, oder eine Schlaufe von Rohrreaktoren. Der Einsatz eines Schlaufenreaktors ist insbesondere deshalb von Vorteil, weil hier eine Rückvermischung realisiert werden kann, so dass die Epoxid-Konzentration gering sein sollte. Um vollständigen Umsatz zu realisieren, ist häufig ein Rohr ("Verweilrohr") nachgeschaltet.

Die erfindungsgemäß erhaltenen Polyethercarbonatpolyole haben eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 20000 g/mol und besonders bevorzugt 500 bis 10000g/mol.

Allgemein können für das erfindungsgemäße Verfahren Alkylenoxide mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ besonders bevorzugt ist -OH. Als H-funktionelle Startersubstanz wird beispielsweise eine oder mehrere Verbindungen ausgewählt aus der Gruppe bestehend aus einwertige Alkohole, mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonalpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Vorteilhaft in der Aktivierung verhalten sich insbesondere die Polyetherpolyole. Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-fiinktionelle Startersubstanzen sind Alkohole der allgemeinen Formel (IX),

$$HO\text{-}(CH_2)_x\text{-}OH \qquad (IX)$$

wobei x eine Zahl von 1 bis 20, bevorzugt eine gerade Zahl von 2 bis 20 ist. Beispiele für Alkohole gemäß Formel (IV) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (IX) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di- und trifunktionelle Polyetherpolyole, wobei das Polyetherpolyol aus einer di-oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich

von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittleren Molekulargewicht größer als 500 g/mol enthalten.

Die erfindungsgemäßen DMC-Katalysatoren werden erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (X),

$$M(X)_n \qquad (X)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XI),

$$M_r(X)_3 \qquad (XI)$$

wobei

M ausgewählt ist aus den Metallkationen $Fe^{3+}$, $Al^{3+}$, $Co^{3+}$ und $Cr^{3+}$,
X sind ein oder mehrere (d.h.verschiedene) Anionen, vorzugsweise ein Anion ausgewählt aus der Gruppe der

Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XII),

$M(X)_s$ (XII)

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XIII),

M(X), (XIII)

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalate ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (XIV)

$(Y)_a M'(CN)_b (A)_c$ (XIV)

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäßen DMC-Katalysatoren enthalten sind, sind Verbindungen der allgemeinen Formel (XV)

$M_x[M'_{x'}(CN)_y]_z$ (XV),

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x=3,x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, a,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00, und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und

anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefiigt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (Hierzu kann z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimalWaschvorgang wiederholt, oder vorzugsweise wird eine werden. Bevorzugt ist es aber, für weitere Waschvorgänge nicht- wässrige Lösung, wieen zu verwenden, z.B. eine Mischung oder Lösung aus ungesättigtem Alkoholaus organischem Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen. Komponenten.

Der isolierte und gegebenenfalls gewaschene Feststoff wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Polydispersität, Funktionalität und/oder Hydroxylzahl erfüllen müssen.

## Beispiele

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie,Teil 1 Tetrahydrofuran als Elutionsmittel". Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Für die Angabe der Menge an eingesetztem Metallsalz wird auch das Verhältnis der eingesetzten Stoffmenge des Metallsalzes bezogen auf die eingesetzte Stoffmenge an Cobalt stammend aus dem DMC-Katalysator angegeben. Für die Berechnung der Stoffmenge an Cobalt stammend aus dem DMC-Katalysator wird ein Gewichtsanteil Co von 11,0 Gew.-% verwendet. Dieser wurde mittels Röntgenfluoreszenzanalyse bestimmt. Auf dieser Grundlage enthalten 141 mg eingesetzter DMC-Katalysator (hergestellt gemäß Beispiel 6 von WO-A 01/80994) eine Stoffmenge an Cobalt von 0,26 mmol.

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400,400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO

mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (XI) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (XVI) für das polymer gebundene Carbonat ("lineares Carbonat" LC) in der Reaktionsmischung in mol% umgerechnet:

$$LC = \frac{F(5,1-4,8) - F(4,5)}{F(5,1-4,8) + F(2,4) + 0,33 * F(1,2-1,0) + 0,25 * F(1,6-1,52)} * 100 \qquad (XVI)$$

Der Gewichtsanteil (in Gew.-%) polymer-gebundenen Carbonats (LC') in der Reaktionsmischung wurde nach Formel (XVII) berechnet,

$$LC' = \frac{[F(5,1-4,8) - F(4,5)] * 102}{N} * 100\% \qquad (XVII)$$

wobei sich der Wert für N ("Nenner" N) nach Formel (XVIII) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \qquad (XVIII)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XIX) berechnet,

$$CC' = \frac{F(4,5) * 102}{N} * 100\% \qquad (XIX)$$

wobei sich der Wert für N nach Formel (XI) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt)..

Herstellung eines Polyethercarbonatpolyols in Abwesenheit von Additiven. (Vergleichsbeispiel 1) In einen 1L

Druckreaktor mit Gasdosierungseinrichtung wurden 141 mg getrockneter DMC-Katalysator, (hergestellt gemäß Beispiel 6 von WO-A 01/80994), sowie 51 g getrocknetes 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C und Abwesenheit von $CO_2$, also Null bar $CO_2$, 25 g Propylenoxid (PO) eindosiert. Das Anspringen der Reaktion machte sich durch eine Temperaturspitze ("Hotspot") und durch Druckabfall auf den Ausgangsdruck (ca. 1 bar) bemerkbar **[Aktivierung** 1]. Nach dem ersten Druckabfall wurden 20 g PO **[Aktivierung 2]** und dann 19 g PO schnell eindosiert **[Aktivierung 3],** wodurch es wiederum jeweils zu einer Temperaturspitze und zu einem Druckabfall kam. Nachdem der Reaktor mit 50 bar $CO_2$ **[Druck 1]** beaufschlagt worden war, wurden 50 g PO schnell eindosiert **[Aktivierung 4],** wodurch es nach einer Wartezeit von 33 Minuten **[Zeit 1]** zu einer Temperaturspitze kam. Ab diesem Zeitpunkt der Temperaturspitze tendierte der Gesamtdruck im Reaktor zu einer Abnahme. Der Druck **[Druck 2]** im Reaktor wurde so geregelt, dass durch regelmäßiges Zudosieren an $CO_2$ der Druck konstant bei dem oben angegebenen Druck 1 gehalten wurde. Nach der erfolgten Aktivierung wurde das restliche Propylenoxid (435 g) kontinuierlich mit ca. 1,8 g/min in den Reaktor gepumpt, während in Schritten von 5°C pro fünf Minuten die Temperatur auf 105 °C **[Temperatur 1]** gesenkt wurde. Nach beendeter PO-Zugabe wurde noch 60 Minuten bei 105 °C und dem oben angegebenen Druck 1 weitergerührt (1500 U/min).
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,9 Gew.%;
Selektivität angegeben als Verhältnis cyclisches Carbonat (unerwünschtes Nebenprodukt) zu Polyethercarbonatpolyol = 0,21;
OH-Zahl des Polyethercarbonatpoyols war 67,2 mg/g;
Polydispersität lag bei 1,45.

Herstellung eines Polyethercarbonatpolyols bei kontinuierlicher Zugabe von 31 g 2,4,6-Tri-tert-Butylphenol (Vergleichsbeispiel 2)

Die Durchführung erfolgte gemäß der Durchführung bei Vergleichsbeispiel 1, wobei aber [Druck 2] 60 bar betrug. Nach erfolgter Aktivierung wurde eine Mischung aus 435 g PO und 31 g 2,4,6-Tri-tert-Butylphenol, in Summe also 461 g, kontinuierlich dosiert. [Temperatur 1] war 110 °C.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,4 Gew.%.

Selektivität angegeben als Verhältnis cyclisches Carbonat (unerwünschtes Nebenprodukt) zu Polyethercarbonatpolyol blieb unverändert bei 0,21 (d.h. wie im Vergleichsbeispiel 1).
OH-Zahl des Polyethercarbonatpoyols war 69,1 mg/g;
Polydispersität wurde schlechter (1,65 statt 1,45).

Herstellung eines Polyethercarbonatpolyols in Gegenwart eines DMC-Katalysators und eines organischen Additivs (Additiv A) und ggf. eines Metallsalzes B **(allgemeine Herstellvorschrift):** In einem 1L Druckreaktor mit Gasdosierungseinrichtung wurden 141 mg getrockneter DMC-Katalysator (hergestellt gemäß Beispiel 6 von WO-A 01/80994), ggf. ein Additiv A (in der in Tabelle 1 angegebenen Art und Menge) **[Additivzugabe A1],** ggf. ein Metallsalz B (in der in Tabelle 1 angegebenen Art und Menge) **[Metallsalzzugabe B1],** sowie 51 g getrocknetes 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde dreimal durchgeführt **[Trocknung].** In den Reaktor wurden bei 130 °C und Abwesenheit von $CO_2$, also Null bar $CO_2$, 25 g Propylenoxid (PO) eindosiert. Ggf. wurde erst hier das Additiv A in den 25 g PO gelöst zugegeben **[Additivzugabe A2].** Das Anspringen der Reaktion machte sich durch eine Temperaturspitze ("Hotspot") und durch Druckabfall auf Werte nahe des Ausgangsdrucks (ca. 1 bar) bemerkbar **[Aktivierung 1].** Nach dem ersten Druckabfall wurden 20 g PO **[Aktivierung 2],** das ggf. Additiv A enthielt **[Additivzugabe A3]** und dann 19 g PO, das ggf. Additiv A enthielt **[Additivzugabe A4]** schnell eindosiert **[Aktivierung 3],** wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert **[Aktivierung 4],** wodurch es nach einer Wartezeit zu einer Temperaturspitze kam **[Zeit 1].** Ab diesem Zeitpunkt der Temperaturspitze tendierte der Gesamtdruck im Reaktor zu einer Abnahme. Der Druck im Reaktor wurde so geregelt, dass durch regelmäßiges Zudosieren an $CO_2$ der Druck konstant bei dem oben angegebenen Druck 1 gehalten wurde. Nach der erfolgten Aktivierung wurde das restliche Propylenoxid (435 g) kontinuierlich mit ca. 1,8 g/min in den Reaktor gepumpt, während in Schritten von 5°C pro fünf Minuten die Temperatur auf 105°C gesenkt wurde. Nach beendeter PO-Zugabe wurde noch 60 Minuten bei 105 °C und dem oben angegebenen Druck weitergerührt (1500 U/min).

Herstellung eines Polyethercarbonatpolyols in Anwesenheit von 61 mg 4-Nitrophenol (Beispiel 3) Die Durchführung erfolgte gemäß der allgemeinen Herstellvorschrift, wobei als Additiv A 4-Nitrophenol zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] betrug 6 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,3 Gew.%;
Selektivität, angegeben als Verhältnis cyclisches Carbonat (unerwünschtes Nebenprodukt) zu Polyethercarbonatpolyol betrug 0,15
OH-Zahl des Polyethercarbonatpoyols war 61,3 mg/g;
Polydispersität betrug 1,40

Herstellung eines Polyethercarbonatpolyols in Anwesenheit von 61 mg 4-Nitrophenol, zugegeben als Lösung in Propylenoxid. (Beispiel 4)
Die Durchführung erfolgte gemäß der allgemeinen Herstellvorschrift, wobei als Additiv A 4-Nitrophenol in der Menge Propylenoxid, die zu den Aktivierungen 1, 2 und 3 verwendet wurde, gelöst wurde und diese Lösung entsprechend bei den Schritten der Aktivierung zugegeben wurde [Additivzugabe A2, A3, A4].
Die Zeit bis zum Hotspot unter $CO_2$ [Aktivierung 4] betrug 7 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 18,3 Gew.%;
Selektivität angegeben als Verhältnis cyclisches Carbonat (unerwünschtes Nebenprodukt) zu Polyethercarbonatpolyol betrug 0,19;
OH-Zahl des Polyethercarbonatpoyol war 65,5 mg/g;
Polydispersität betrug 1,22

Herstellung eines Polyethercarbonatpolyols in Anwesenheit von 81 mg 2,4-Dinitrophenol. (Beispiel 5)
Die Durchführung erfolgte gemäß der allgemeinen Herstellvorschrift, wobei als Additiv A 2,4 Dinitrophenol zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] betrug 14 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 18,0 Gew.%;
Selektivität angegeben als Verhältnis cyclisches Carbonat (unerwünschtes Nebenprodukt) zu Polyethercarbonatpolyol betrug 0,16
OH-Zahl des Polyethercarbonatpoyol war 59,3 mg/g;
Polydispersität betrug 1,17

Herstellung eines Polyethercarbonatpolyols in Anwesenheit von 74 mg 4-tert-butyl-(brenz)-Catechol. (Beispiel 6)
Die Durchführung erfolgte gemäß der allgemeinen Herstellvorschrift, wobei als Additiv A 4-tert-butyl-(brenz)-Catechol zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] betrug 17 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,8 Gew.%;
Selektivität angegeben als Verhältnis cyclisches Carbonat (unerwünschtes Nebenprodukt) zu Polyethercarbonatpolyol betrug 0,18
OH-Zahl des Polyethercarbonatpoyol war 65,1 mg/g;
Polydispersität betrug 1,38

Herstellung eines Polyethercarbonatpolyols in Anwesenheit von 88 mg Phenothiazin ((Beispiel 7) Die Durchführung erfolgte gemäß der allgemeinen Herstellvorschrift, wobei als Additiv A Phenothiazin zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] verkürzte sich von 33 Minuten auf 6 Minuten. Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 18,6 Gew.%;
Selektivität angegeben als Verhältnis cyclisches Carbonat (unerwünschtes Nebenprodukt) zu Polyethercarbonatpolyol betrug 0,15
OH-Zahl des Polyethercarbonatpoyol war 57,8 mg/g;
Polydispersität betrug 1,30

Herstellung eines Polyethercarbonatpolyols in Anwesenheit von 88 mg Phenothiazin, zugegeben als Lösung in Propylenoxid. (Beispiel 8)
Die Durchführung erfolgte gemäß der allgemeinen Herstellvorschrift, wobei als Additiv A Phenothiazin in der Menge Propylenoxid, die zur Aktivierung 1 verwendet wurde, zugegeben wurde [Additivzugabe A2].
Die Zeit bis zum Hotspot unter $CO_2$ [Aktivierung 4] betrug 7 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 17,8 Gew.%;
Selektivität angegeben als Verhältnis cyclisches Carbonat (unerwünschtes Nebenprodukt) zu Polyethercarbonatpolyol betrug 0,19
OH-Zahl des Polyethercarbonatpoyols war 64,9
Polydispersität betrug 1,19

Herstellung eines Polyethercarbonatpolyols in Anwesenheit von 81 mg Phenoxazin. (Beispiel 9) Die Durchführung erfolgte gemäß der allgemeinen Herstellvorschrift, wobei als Additiv A Phenoxazin zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] betrug 21 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,8 Gew.%;
Selektivität angegeben als Verhältnis cyclisches Carbonat (unerwünschtes Nebenprodukt) zu Polyethercarbonatpolyol betrug 0,17
OH-Zahl des Polyethercarbonatpoyols war 56,7 mg/g;
Polydispersität betrug 1,40

Herstellung eines Polyethercarbonatpolyols in Anwesenheit von 68 mg 2,2,6,6-Tetramethylpiperidine-1-oxyl. (Beispiel 10)
Die Durchführung erfolgte gemäß der allgemeinen Herstellvorschrift, wobei als Additiv A 2,2,6,6-Tetramethylpiperidine-1-oxyl (TEMPO) zusammen mit Katalysator und 1,8 Octandiol (Starter) als Feststoff vorgelegt wurde [Additivzugabe A1].
Die Zeit bis zum Hotspot unter $CO_2$ [Aktivierung 4] betrug 15 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,0 Gew.%;
Selektivität angegeben als Verhältnis cyclisches Carbonat (unerwünschtes Nebenprodukt) zu Polyethercarbonatpolyol betrug 0,16
OH-Zahl des Polyethercarbonatpoyols war 61,8 mg/g;
Polydispersität betrug 1,23

Herstellung eines Polyethercarbonatpolyols in Anwesenheit von 65 mg trans-β-Nitrostyrol. (Beispiel 11)
Die Durchführung erfolgte gemäß der allgemeinen Herstellvorschrift, wobei als Additiv A trans-β-Nitrostyrol zusammen mit DMC-Katalysator und 1,8 Octandiol (Starter) als Feststoff vorgelegt wurde [Additivzugabe A1].
Die Zeit bis zum Hotspot unter $CO_2$ [Aktivierung 4] betrug 19 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,5 Gew.%;
Selektivität angegeben als Verhältnis cyclisches Carbonat (unerwünschtes Nebenprodukt) zu Polyethercarbonatpolyol betrug 0,15
OH-Zahl des Polyethercarbonatpoyols war 62,6 mg/g;
Polydispersität betrug 1,42

Herstellung eines Polyethercarbonatpolyols in Anwesenheit von 52 mg 2,2’ Dithiobis(benzothiazol). (Beispiel 12)
Die Durchführung erfolgte gemäß der allgemeinen Herstellvorschrift, wobei als Additiv A 2,2’ Dithiobis(benzothiazol) zusammen mit DMC-Katalysator und 1,8 Octandiol (Starter) als Feststoff vorgelegt wurde [Additivzugabe A1].

Die Zeit bis zum Hotspot unter $CO_2$ [Aktivierung 4] betrug 9 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,0 Gew.%;
Selektivität angegeben als Verhältnis cyclisches Carbonat (unerwünschtes Nebenprodukt) zu Polyethercarbonatpolyol betrug 0,18
OH-Zahl des Polyethercarbonatpoyols war 64,6 mg/g;
Polydispersität betrug 1,17

Herstellung eines Polyethercarbonatpolyols in Anwesenheit von 52 mg α-Methylstyrol. (Vergleichsbeispiel 13)
Die Durchführung erfolgte gemäß der allgemeinen Herstellvorschrift, wobei als Additiv A α-Methylstyrol zusammen mit Katalysator und 1,8 Octandiol (Starter) als Feststoff vorgelegt wurde [Additivzugabe A1].
Die Zeit bis zum Hotspot unter $CO_2$ [Aktivierung 4] betrug 30 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 17,2 Gew.%;
Selektivität angegeben als Verhältnis cyclisches Carbonat (unerwünschtes Nebenprodukt) zu Polyethercarbonatpolyol betrug 0,22
OH-Zahl des Polyethercarbonatpoyols war 70,5 mg/g;
Polydispersität betrug 1,47

**Diskussion der Ergebnisse Beispiele 1 -13 (Tabelle** 1)

Wie aus den Resultaten des Vergleichsbeispiels 2 ersichtlich, wird keine signifikante Verbesserung im Sinne der Erfindung durch Verwendung eines sterisch gehinderten 2,4,6-Tri-tert-Butylphenols in einer Menge von deutlich mehr als mindestens 10-fachem molaren Überschuss festgestellt.
Werden die in den Beispielen 3-12 genannten organischen Additive zugesetzt, so wird die Zeit bis zum Hotspot unter Kohlendioxid [Aktivierung 4] z.T. signifikant verkürzt, so dass weniger Zeit zum Ausführen der Reaktion verwendet werden muss. Alle organischen Additive der Beispiele 3-12 verbessern die Selektivität (Wert cyclisch/linear wird kleiner)und führen zu Polyethercarbonatpolyolen mir einer niedrigen Polydispersität. Vorteilhafterweise wird mit dem Additiv Phenoxazin auch ein höherer Einbau von Kohlendioxid in das Polymer erreicht (Beispiel 9). Andere organische Substanzen wie beispielsweise α-Methylstyrol (Vergleichsbeispiel 13) sind nicht geeignet, um die erfindungsgemäße Aufgabe zu lösen.

Herstellung eines Polyethercarbonatpolyols in Anwesenheit von 405 mg Calciumstearat (Vergleichsbeispiel 14)

Die Durchführung erfolgte gemäß der allgemeinen Herstellvorschrift, wobei als Metallsalz B Calciumstearat zusammen mit DMC-Katalysator und 1,8 Octandiol (Starter) als Feststoff vorgelegt wurde [Metallsalzzugabe B1].
Die Zeit bis zum Hotspot unter $CO_2$ [Aktivierung 4] betrug 15 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,2 Gew.%;
Selektivität angegeben als Verhältnis cyclisches Carbonat (unerwünschtes Nebenprodukt) zu Polyethercarbonatpolyol betrug 0,10
OH-Zahl des Polyethercarbonatpoyol war 64,3 mg/g;
Polydispersität betrug 1,37.

Herstellung eines Polyethercarbonatpolyols in Anwesenheit von 390 mg Aluminiumstearat (Vergleichsbeispiel 15)

Die Durchführung erfolgte gemäß der allgemeinen Herstellvorschrift, wobei als Metallsalz B Aluminiumstearat zusammen mit DMC-Katalysator und 1,8 Octandiol (Starter) als Feststoff vorgelegt wurde [Metallsalzzugabe B1].
Die Zeit bis zum Hotspot unter $CO_2$ [Aktivierung 4] betrug 19 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 23,1 Gew.%;
Selektivität angegeben als Verhältnis cyclisches Carbonat (unerwünschtes Nebenprodukt) zu Polyethercarbonatpolyol betrug 0,15
OH-Zahl des Polyethercarbonatpoyol war 63,3 mg/g;

Polydispersität betrug 1,86.

Herstellung eines Polyethercarbonatpolyols in Anwesenheit von 88 mg Phenothiazin und 405 mg Calciumstearat (Beispiel 16)

Die Durchführung erfolgte gemäß der allgemeinen Herstellvorschrift, wobei als Additiv A Phenothiazin und als Metallsalz B Calciumstearat zusammen mit DMC-Katalysator und 1,8 Octandiol (Starter) als Feststoff vorgelegt wurden [Additivzugabe A1 und Metallsalzzugabe B1]. Die Zeit bis zum Hotspot unter $CO_2$ [Aktivierung 4] betrug 7 Minuten. Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,1 Gew.%;
Selektivität angegeben als Verhältnis cyclisches Carbonat (unerwünschtes Nebenprodukt) zu Polyethercarbonatpolyol betrug 0,09
OH-Zahl des Polyethercarbonatpoyol war 65,5 mg/g;
Polydispersität betrug 1,27.

Herstellung eines Polyethercarbonatpolyols in Anwesenheit von 81 mg 2,4-Dinitrophenol und 405 mg Calciumstearat (Beispiel 17)

Die Durchführung erfolgte gemäß der allgemeinen Herstellvorschrift, wobei als Additiv A 2,4 Dinitrophenol und als Metallsalz B Calciumstearat zusammen mit DMC-Katalysator und 1,8 Octandiol (Starter) als Feststoff vorgelegt wurden [Additivzugabe A1 und Metallsalzzugabe B1]. Die Zeit bis zum Hotspot unter $CO_2$ [Aktivierung 4] betrug 7 Minuten.

Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,4 Gew.%;
Selektivität angegeben als Verhältnis cyclisches Carbonat (unerwünschtes Nebenprodukt) zu Polyethercarbonatpolyol betrug 0,09
OH-Zahl des Polyethercarbonatpoyol war 63,2 mg/g;
Polydispersität betrug 1,24.

Herstellung eines Polyethercarbonatpolyols in Anwesenheit von 61 mg 4-Nitrophenol und 405 mg Calciumstearat (Beispiel 18)

Die Durchführung erfolgte gemäß der allgemeinen Herstellvorschrift, wobei als Additiv A 4-Nitrophenol und als Metallsalz B Calciumstearat zusammen mit DMC-Katalysator und 1,8 Octandiol (Starter) als Feststoff vorgelegt wurden [Additivzugabe A1 und Metallsalzzugabe B1].
Die Zeit bis zum Hotspot unter $CO_2$ [Aktivierung 4] betrug 7 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 20,4 Gew.%;
Selektivität angegeben als Verhältnis cyclisches Carbonat (unerwünschtes Nebenprodukt) zu Polyethercarbonatpolyol betrug 0,09
OH-Zahl des Polyethercarbonatpoyol war 63,7 mg/g;
Polydispersität betrug 1,23.

Herstellung eines Polyethercarbonatpolyols in Anwesenheit von 88 mg Phenothiazin und 390 mg Aluminiumstearat (Beispiel 19)

Die Durchführung erfolgte gemäß der allgemeinen Herstellvorschrift, wobei als Additiv A Phenothiazin und als Metallsalz B Aluminiumstearat zusammen mit DMC-Katalysator und 1,8 Octandiol (Starter) als Feststoff vorgelegt wurden [Additivzugabe A1 und Metallsalzzugabe B1]. Die Zeit bis zum Hotspot unter $CO_2$ [Aktivierung 4] betrug 10 Minuten. Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 21,7 Gew.%;
Selektivität angegeben als Verhältnis cyclisches Carbonat (unerwünschtes Nebenprodukt) zu Polyethercarbonatpolyol betrug 0,16
OH-Zahl des Polyethercarbonatpoyol war 66,9 mg/g;
Polydispersität betrug 1,40.

Herstellung eines Polyethercarbonatpolyols in Anwesenheit von 81 mg 2,4-Dinitrophenol und 390 mg Aluminiumstearat (Beispiel 20)

Die Durchführung erfolgte gemäß der allgemeinen Herstellvorschrift, wobei als Additiv A 2,4-Dinitrophenol und als Metallsalz B Aluminiumstearat zusammen mit DMC-Katalysator und 1,8 Octandiol (Starter) als Feststoff vorgelegt wurden [Additivzugabe A1 und Metallsalzzugabe B1 Die Zeit bis zum Hotspot unter $CO_2$ [Aktivierung 4] betrug 12 Minuten. Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 23,4 Gew.%;
Selektivität angegeben als Verhältnis cyclisches Carbonat (unerwünschtes Nebenprodukt) zu Polyethercarbonatpolyol betrug 0,16
OH-Zahl des Polyethercarbonatpoyol war 66,5 mg/g;
Polydispersität betrug 1,66.

Herstellung eines Polyethercarbonatpolyols in Anwesenheit von 61 mg 4-Nitrophenol und 390 mg Aluminiumstearat (Beispiel 21)

Die Durchführung erfolgte gemäß der allgemeinen Herstellvorschrift, wobei als Additiv A 4-Nitrophenol und als Metallsalz B Aluminiumstearat zusammen mit DMC-Katalysator und 1,8 Octandiol (Starter) als Feststoff vorgelegt wurden [Additivzugabe A1 und Metallsalzzugabe B1]. Die Zeit bis zum Hotspot unter $CO_2$ [Aktivierung 4] betrug 12 Minuten. Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 24,1 Gew.%;
Selektivität angegeben als Verhältnis cyclisches Carbonat (unerwünschtes Nebenprodukt) zu Polyethercarbonatpolyol betrug 0,13
OH-Zahl des Polyethercarbonatpoyol war 61,5 mg/g;
Polydispersität betrug 1,61.

Herstellung eines Polyethercarbonatpolyols in Anwesenheit von 81 mg Phenoxazin und 405 mg Calciumstearat (Beispiel 22)

Die Durchführung erfolgte gemäß der allgemeinen Herstellvorschrift, wobei als Additiv A Phenoxazin und als Metallsalz B Calciumstearat zusammen mit DMC-Katalysator und 1,8 Octandiol (Starter) als Feststoff vorgelegt wurden [Additivzugabe A1 und Metallsalzzugabe B1].
Die Zeit bis zum Hotspot unter $CO_2$ [Aktivierung 4] betrug 8 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 18,3 Gew.%;
Selektivität angegeben als Verhältnis cyclisches Carbonat (unerwünschtes Nebenprodukt) zu Polyethercarbonatpolyol betrug 0,13
OH-Zahl des Polyethercarbonatpoyol war 62,3 mg/g;
Polydispersität betrug 1,24.

Herstellung eines Polyethercarbonatpolyols in Anwesenheit von 81 mg Phenoxazin und 390 mg Aluminiumstearat (Beispiel 23)

Die Durchführung erfolgte gemäß der allgemeinen Herstellvorschrift, wobei als Additiv A Phenoxazin und als Metallsalz B Aluminiumstearat zusammen mit DMC-Katalysator und 1,8 Octandiol (Starter) als Feststoff vorgelegt wurden [Additivzugabe A1 und Metallsalzzugabe B1].
Die Zeit bis zum Hotspot unter $CO_2$ [Aktivierung 4] betrug 8 Minuten.
Das so hergestellte Polyethercarbonatpolyol zeichnet sich durch folgende Eigenschaften aus:

Eingebautes $CO_2$ [Gew.%] bezogen auf den Teil des Polymers, der unter $CO_2$ gebildet wurde: 19,8 Gew.%;
Selektivität angegeben als Verhältnis cyclisches Carbonat (unerwünschtes Nebenprodukt) zu Polyethercarbonatpolyol betrug 0,18
OH-Zahl des Polyethercarbonatpoyol war 60,3 mg/g;
Polydispersität betrug 1,22.

**Diskussion der Ergebnisse der Beispiele 14 - 23 (Tabelle 2)**

Die Beispiele 16 bis 23 der Tabelle 2 belegen den vorteilhaften Effekt der gleichzeitigen Verwendung eines Additves A) und eines Metallsalzes B). Es wird gegenüber dem Verfahren ohne diese Zusätze (Vergleichsbeispiel 1, Tabelle 1) eine günstigere Selektivität, eine kürzere Aktivierungszeit und gleichzeitig ein hoher Gehalt an eingebautem $CO_2$ im resultierenden Polyethercarbonatpolyol erreicht. Besonders günstig erwiesen sich die Kombination aus 4-Dinitrophenol oder 2,4-Dinitrophenol mit Calciumstearat oder Aluminiumstearat (Beispiele 17, 18, 20 und 21).

Tabelle 1: Resultate der Polyethercarbonatpolyol-Herstellung

| Beispiel | Additiv A) | [mmol Additiv A)] / [mmol Co] | Zeit 1 [min] | $CO_2$-Einbau [Gew.%] | Selektivität cyclisch/linear | OH-Zahl [mg KOH/g] | Polydispersität |
|---|---|---|---|---|---|---|---|
| **1** (Vgl) | ohne Additiv | 0 | 33 | 19,9 | 0,21 | 67,2 | 1,45 |
| **2** (Vgl.) | 2,4,6-Tri-tert-Butylphenol (31 g gelÃ¶st in 435 g PO (kontinuierliche PO-Zugabe)) | 448,59 | 60 | 20,4 | 0,21 | 69,1 | 1,65 |
| **3** | 4-Nitrophenol | 1,67 | 6 | 19,3 | 0,15 | 61,3 | 1,40 |
| **4** | 4-Nitrophenol (gelÃ¶st in 64 g PO, Zugabe bei Aktivierung) | 1,67 | 7 | 18,3 | 0,19 | 65,5 | 1,22 |
| **5** | 2,4-Dinitrophenol | 1,67 | 14 | 18,0 | 0,16 | 59,3 | 1,17 |
| **6** | 4-tert-Butyl-Brenzcatechol | 1,67 | 17 | 19,8 | 0,18 | 65,1 | 1,38 |
| **7** | Phenothiazin | 1,67 | 6 | 18,6 | 0,15 | 57,8 | 1,30 |
| **8** | Phenothiazin (gelÃ¶st in 25 g PO, Zugabe in einem Aktivierungsschritt) | 1,67 | 7 | 17,8 | 0,19 | 64,9 | 1,19 |
| **9** | Phenoxazin | 1,67 | 21 | 20,8 | 0,17 | 56,7 | 1,40 |
| **10** | 2,2,6,6,-Tetramethylpiperidin-1-oxyl | 1,67 | 15 | 19,0 | 0,16 | 61,8 | 1,23 |
| **11** | trans-Î²-Nitrostyrol | 1,67 | 19 | 19,5 | 0,15 | 62,6 | 1,42 |
| **12** | 2,2'-Dithiobis(benzothiazol) | 1,67 | 9 | 19,0 | 0,18 | 64,6 | 1,17 |
| **13** (Vgl.) | Î±-Methylstyrol | 1,67 | 30 | 17,2 | 0,22 | 70,5 | 1,47 |
| Vgl. = Vergleichsbeispiel | | | | | | | |

Tabelle 2: Resultate der Polyethercarbonatpolyol-Herstellung

| Beispiel | Additiv A) | Metallsalz B) | [mmol Additiv A)] / [mmol Co] | [mmol Metallsalz B)] / [mmol Co] | Zeit 1 [min] | $CO_2$-Einbau [Gew.%] | Selektivität cyclisch / linear | OH-Zahl [mg KOH/g] | Polydispersität |
|---|---|---|---|---|---|---|---|---|---|
| **14** (Vgl.) | ohne Additiv A) | Calciumstearat | 0 | 2,54 | 15 | 20,2 | 0,10 | 64,3 | 1,37 |
| **15** (Vgl.) | ohne Additiv A) | Aluminiumstearat | 0 | 1,67 | 19 | 23,1 | 0,15 | 63,3 | 1,86 |
| **16** | Phenothiazin | Calciumstearat | 1,67 | 2,54 | 7 | 20,1 | 0,09 | 65,5 | 1,27 |
| **17** | 2,4 Dinitrophenol | Calciumstearat | 1,67 | 2,54 | 7 | 20,4 | 0,09 | 63,2 | 1,24 |
| **18** | 4-Nitrophenol | Calciumstearat | 1,67 | 2,54 | 7 | 20,4 | 0,09 | 63,7 | 1,23 |
| **19** | Phenothiazin | Aluminiumstearat | 1,67 | 1,67 | 10 | 21,7 | 0,16 | 66,9 | 1,40 |
| **20** | 2,4 Dinitrophenol | Aluminiumstearat | 1,67 | 1,67 | 12 | 23,4 | 0,16 | 66,5 | 1,66 |
| **21** | 4-Nitrophenol | Aluminiumstearat | 1,67 | 1,67 | 12 | 24,1 | 0,13 | 61,5 | 1,61 |
| **22** | Phenoxazin | Calciumstearat | 1,67 | 2,54 | 8 | 18,3 | 0,13 | 62,3 | 1,24 |
| **23** | Phenoxazin | Aluminiumstearat | 1,67 | 1,67 | 8 | 19,8 | 0,18 | 60,9 | 1,22 |
| Vgl. = Vergleichsbeispiel | | | | | | | | | |

**Patentansprüche**

1. Verfahren zur Herstellung von Polyethercarbonatpolyolen aus einer oder mehreren H-funktionellen Startsubstanzen, eines oder mehrerer Alkylenoxiden und Kohlendioxid in Gegenwart eines Doppelmetallcyanid-Katalysators und in Gegenwart wenigstens eines Additivs A), **dadurch gekennzeichnet, dass**

(α) die H-funktionelle Startersubstanz oder ein Gemisch aus mindestens zwei H-funktionellen Startersubstanzen vorgelegt werden, wobei der DMC-Katalysator der H-funktionellen Startersubstanz oder dem Gemisch von mindestens zwei H-funktionellen Startersubstanzen zugesetzt werden,
(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze und/oder ein Druckabfall im Reaktor jeweils abgewartet wird, und wobei der Schritt (β) zur Aktivierung auch mehrfach erfolgen kann,
(γ) ein oder mehrere Alkylenoxide und Kohlendioxid zu der aus Schritt (β) resultierenden Mischung zugesetzt werden ("Copolymerisation"), wobei die für die Copolymerisation eingesetzten Alkylenoxide gleich oder verschieden sein können von den bei der Aktivierung eingesetzten Alkylenoxiden,

wobei das Additiv A) in Schritt (α) der H-funktionellen Startersubstanz oder dem Gemisch von mindestens zwei H-funktionellen Startersubstanzen und/oder das Additiv A) in Schritt (β) der Teilmenge von einem oder mehreren Alkylenoxiden zu der aus Schritt (α) resultierenden Mischung zugesetzt werden, und
wobei das Additiv A) mindestens eine Verbindung ausgewählt aus der Gruppe bestehend aus

- sterisch ungehinderten Phenolen gemäß Formel (II)

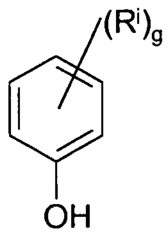

(II),

wobei

g = 1 oder 2 ist und
$R^i$ für eine Amino-, Bromo-, Chloro-, Cyano-, Iodo-, Methoxy-, Methyl- oder Nitrogruppe steht;

- Catecholen gemäß Formel (IIIa) und Brenzcatecholen gemäß Formel (IIIb),

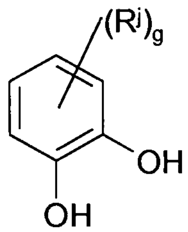

(IIIa)

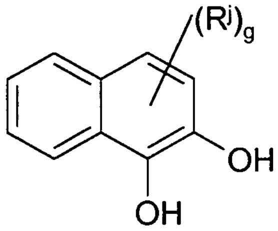

(IIIb)

wobei

g die oben genannte Bedeutung hat und
$R^j$ für eine Acetamido-, Amino-, Bromo-, n-Butyl-, iso-Butyl-, tert.-Butyl-, Chloro-, Cyano-, Ethoxy-, Ethyl-, Fluoro-, Iodo-, Methoxy-, Methyl-, Nitro-, iso-Propyl- oder n-Propylgruppe steht;

- Phenothiazinen,
- Benzothiazolen,
- Phenoxazine
- 2,2,6,6,-Tetramethylpiperidin-1-oxyl und
- Nitrostyrolen ist.

**2.** Verfahren gemäß Anspruch 1, wobei die Herstellung in Gegenwart eines DMC-Katalysators und in Gegenwart von wenigstens einem Additiv A) sowie in Gegenwart von wenigstens einem Metallsalz B) durchgeführt wird, **dadurch gekennzeichnet, dass** wobei das Additiv A) in Schritt ($\alpha$) der H-funktionellen Startersubstanz oder dem Gemisch von mindestens zwei H-funktionellen Startersubstanzen, und/oder das Additiv A) in Schritt ($\beta$) der Teilmenge von einem oder mehreren Alkylenoxiden zu der aus Schritt ($\alpha$) resultierenden Mischung zugesetzt werden,
wobei das Metallsalz B) in Schritt ($\alpha$) der H-funktionellen Startersubstanz oder dem Gemisch von mindestens zwei H-funktionellen Startersubstanzen zugesetzt wird,
wobei als Metallsalz B) mindestens eine Verbindung ausgewählt aus der Gruppe bestehend aus Erdalkalihalogeniden, Erdalkalicarboxylaten oder Aluininiumcarboxylaten eingesetzt wird.

**3.** Verfahren gemäß Anspruch 2, wobei als Additiv A) 4-Dinitrophenol und/oder 2,4-Dinitrophenol und als Metallsalz B) mindestens eine Verbindung ausgewählt aus der Gruppe bestehend aus Magnesiumacetat, Calciumacetat, Magnesiumstearat, Calciumstearat und Aluminiumstearat eingesetzt werden.

**4.** Verfahren gemäß einem der Ansprüche 1 bis 3**dadurch gekennzeichnet, dass** in Schritt ($\alpha$) die H-funktionelle Startersubstanz oder ein Gemisch aus mindestens zwei H-funktionellen Startersubstanzen vorgelegt werden und Wasser durch erhöhte Temperatur und/oder reduziertem Druck entfernt wird ("Trocknung")" wobei der DMC-Katalysator, das Additiv A) und gegebenenfalls das Metallsalz B) der H-funktionellen Startersubstanz oder dem Gemisch von mindestens zwei H-funktionellen Startersubstanzen vor oder nach der Trocknung zugesetzt werden.

**5.** Verfahren gemäß einem der Ansprüche 1 bis 4, wobei zur Aktivierung gemäß Schritt $\beta$)

($\beta$1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird,
($\beta$2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid gegebenenfalls in Gegenwart von $CO_2$ erfolgen kann, vorzugsweise aber unter Abwesenheit von $CO_2$, und wobei dann die aufgrund der folgenden exothermen chemischen Reaktion auftretende Temperaturspitze ("Hotspot") und/oder ein Druckabfall im Reaktor jeweils abgewartet wird.

**6.** Verfahren gemäß Anspruch 5, wobei zur Aktivierung

(β3) in einem dritten Aktivierungsschritt bzw. weiteren Aktivierungsschritten nach der im vorangegangenen Aktivierungsschritt erreichten Temperaturspitze der Schritt (β2) ein bis fünfmal wiederholt wird, wobei diese Zugabe der Teilmenge bzw. Zugaben der Teilmengen an Alkylenoxid unter Abwesenheit von $CO_2$ erfolgt.

**7.** Verfahren gemäß Anspruch 6, wobei zur Aktivierung

(β4) in einem weiteren Aktivierungsschritt bzw. weiteren Aktivierungsschritten nach der im vorangegangenen Aktivierungsschritt erreichten Temperaturspitze der Schritt (β3) ein bis fünfmal wiederholt wird, wobei diese Zugabe der Teilmenge bzw. Zugaben der Teilmengen an Alkylenoxid in Gegenwart von $CO_2$ erfolgt.

**8.** Verfahren gemäß Anspruch 7, wobei die bei der Aktivierung in den Schritten β1 bis β4 jeweils eingesetzte Teilmenge von einem oder mehrerer Alkylenoxiden 2,0 bis 15,0 Gew.-% (bezogen auf die Gesamtmenge der bei der Aktivierung und Copolymerisation eingesetzten Menge an Alkylenoxiden) beträgt.

**9.** Verfahren gemäß einem der Ansprüche 1 bis 8, wobei die Menge der eingesetzten Additive A) von 0,2 bis 10,0 [mmol Additiv A)] / [mmol Co] beträgt.

**10.** Verfahren gemäß einem der Ansprüche 2 bis 8, wobei die Menge des eingesetzten Additivs A) von 0,8 bis 4,0 [mmol Additiv A)] / [mmol Co] und die Menge des eingesetzten Metallsalzes B) 0,8 bis 4,0 [mmol Metallsalz B)] / [mmol Co] beträgt.

**11.** Verfahren gemäß einem der Ansprüche 1 bis 9, wobei in der Definition von Additiv A)

- die Phenothiazine solche gemäß Formel (IVb) sind

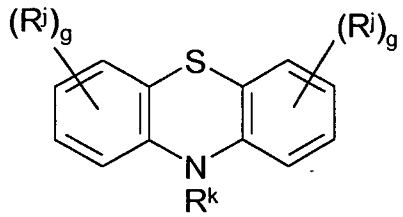

(IVb);

- die Benzothiazole solche gemäß Formel (Vb) sind

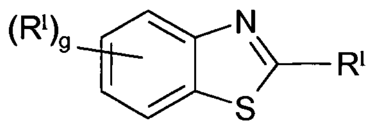

(Vb);

- die Phenoxazine solche gemäß Formel (VIb) sind

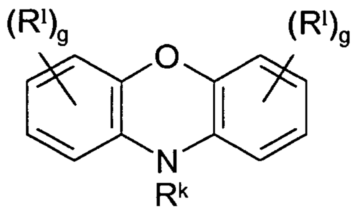

(VIb)

wobei in den zuvor genannten Formeln

g = 0, 1, oder 2 ist und
$R^j$ für eine Acetamido-, Amino-, Bromo-, n-Butyl-, iso-Butyl-, tert.-Butyl-, Chloro-, Cyano-, Ethoxy-, Ethyl-, Fluoro-, Iodo-, Methoxy-, Methyl-, Nitro-, iso-Propyl-, n-Propylgruppe steht,

$R^k$ für eine H oder eine $C_1$- $C_{20}$-Alkylgruppe, vorzugsweise für H oder eine Methyl-, Ethyl-, iso-Propyl-, n-Propyl-, n-Butyl-, iso-Butyl-, tert.-Butyl-, Hexyl-, Cyclohexylgruppe steht,
$R^1$ für eine H, $C_1$ - $C_{20}$-Alkylgruppe (beispielsweise Methyl-, Ethyl-, iso-Propyl-, n-Propyl-, n-Butyl-, iso-Butyl-, tert.-Butyl-, Hexyl-, Cyclohexylgruppe), Acetamido-, Amino-, Bromo-, Chloro-, Cyano-, Ethoxy-, Ethyl-, Fluoro-, Hydroxy-, Iodo-, Methoxy-, Nitrogruppe steht, oder wobei die Thiazol- und/oder die Benzothiazol-Fragmente über Disulfidbrücken miteinander verknüpft sind,
und/oder

- das Nitrostyrol ein $\alpha$-Nitrostyrol oder $\beta$-Nitrostyrol ist.

**12.** Verfahren gemäß einem der Ansprüche 1 bis 11, wobei die eingesetzten H-funktionellen Startersubstanzen ausgewählt sind aus mindestens einer der Gruppe bestehend aus Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine, Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten.

**13.** Verfahren gemäß einem der Ansprüche 1 bis 12, wobei der eingesetzte Doppelmetallcyanid-Katalysator mindestens eine Doppelmetallcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

**14.** Verfahren gemäß Anspruch 13, wobei der eingesetzte Doppelmetallcyanid-Katalysator zusätzlich mindestens einen organischen Komplexliganden ausgewählt aus der Gruppe bestehend aus aliphatischem Ether, Ethanol, Isopropanol, n-Butanol, iso-Butanol, sek.-Butanol, tert-Butanol, 2-Methyl-3-buten-2-ol, 2-Methyl-3-butin-2-ol, Ethylenglykol-mono-tert.-butylether, Diethylenglykol-mono-tert.-butylether, Tripropylenglykol-mono-methylether und 3-Methyl-3-oxetan-methanol enthält.

**15.** Verfahren gemäß einem der Ansprüche 1 bis 13, welches in einem Rohrreaktor, Rührkessel oder Schlaufenreaktor durchgeführt wird.

## Claims

**1.** Process for the preparation of polyether carbonate polyols from one or more H-functional starter substances, one or more alkylene oxides and carbon dioxide in the presence of a double metal cyanide catalyst and in the presence of at least one additive A), **characterized in that**

($\alpha$) the H-functional starter substance or a mixture of at least two H-functional starter substances is initially introduced into the reaction vessel, the DMC catalyst being added to the H-functional starter substance or the mixture of at least two H-functional starter substances,
($\beta$) for the activation, a part amount (based on the total amount of the amount of alkylene oxides employed in the activation and copolymerization) of one or more alkylene oxides is added to the mixture resulting from step ($\alpha$), it being possible for this addition of a part amount of alkylene oxide optionally to be carried out in the presence of $CO_2$, and the temperature peak which occurs due to the subsequent exothermic chemical reaction and/or a drop in pressure in the reactor then in each case being awaited, and it also being possible for step ($\beta$) to be carried out several times for the activation,
($\gamma$) one or more alkylene oxides and carbon dioxide are added to the mixture resulting from step ($\beta$) ("copolymerization"), it being possible for the alkylene oxides employed for the copolymerization to be identical to or different from the alkylene oxides employed in the activation,

wherein the additive A) is added in step ($\alpha$) to the H-functional starter substance or the mixture of at least two H-functional starter substances and/or the additive A) is added in step ($\beta$) to the part amount of one or more alkylene oxides to the mixture resulting from step ($\alpha$), and
wherein the additive A) is at least one compound chosen from the group consisting of

- sterically non-hindered phenols according to formula (II)

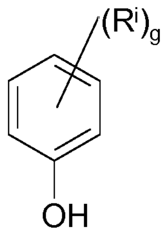

(II)

wherein

g = 1 or 2 and
$R^i$ represents an amino, bromo, chloro, cyano, iodo, methoxy, methyl or nitro group;

- catechols according to formula (IIIa) and pyrocatechols according to formula (IIIb)

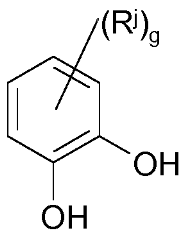

(IIIa)

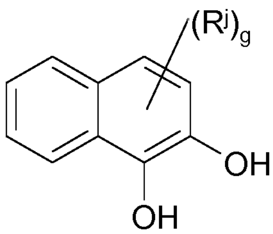

(IIIb)

wherein

g is as defined above
$R^j$ represents an acetamido, amino, bromo, n-butyl, iso-butyl, tert-butyl, chloro, cyano, ethoxy, ethyl, fluoro, iodo, methoxy, methyl, nitro, iso-propyl or n-propyl group;

- phenothiazines,
- benzothiazoles,
- phenoxazines,
- 2, 2, 6, 6 -tetramethylpiperidine 1-oxyl and
- nitro styrenes.

**2.** Process according to claim 1, wherein the preparation is carried out in the presence of a DMC catalyst and in the presence of at least one additive A) and in the presence of at least one metal salt B), **characterized in that** wherein the additive A) is added in step ($\alpha$) to the H-functional starter substance or the mixture of at least two H-functional starter substances, and/or the additive A) is added in step ($\beta$) to the part amount of one or more alkylene oxides to the mixture resulting from step ($\alpha$),
wherein the metal salt B) is added in step ($\alpha$) to the H-functional starter substance or the mixture of at least two H-functional starter substances, wherein at least one compound chosen from the group consisting of alkaline earth metal halides, alkaline earth metal carboxylates or aluminium carboxylates is employed as the metal salt B).

**3.** Process according to claim 2, wherein 4-dinitrophenol and/or 2,4-dinitrophenol is employed as the additive A) and at least one compound chosen from the group consisting of magnesium acetate, calcium acetate, magnesium stearate, calcium stearate and aluminium stearate is employed as the metal salt B).

**4.** Process according to one of claims 1 to 3, **characterized in that** in step (α) the H-functional starter substance or a mixture of at least two H-functional starter substances is initially introduced into the reaction vessel and water is removed by elevated temperature and/or reduced pressure ("drying"), the DMC catalyst, the additive A) and optionally the metal salt B) being added to the H-functional starter substance or the mixture of at least two H-functional starter substances before or after the drying.

**5.** Process according to one of claims 1 to 4, wherein for the activation according to step (β)

(β1) in a first activation step a first part amount (based on the total amount of the amount of alkylene oxides employed in the activation and copolymerization) of one or more alkylene oxides is added to the mixture resulting from step (α), it being possible for this addition of the part amount of alkylene oxide optionally to be carried out in the presence of $CO_2$, but preferably in the absence of $CO_2$, and the temperature peak ("hot spot") which occurs due to the subsequent exothermic chemical reaction and/or a drop in pressure in the reactor then in each case being awaited,
(β2) in a second activation step after the temperature peak reached in the preceding activation step, a second part amount (based on the total amount of the amount of alkylene oxides employed in the activation and copolymerization) of one or more alkylene oxides is added to the mixture resulting from the preceding activation step, it being possible for this addition of the part amount of alkylene oxide optionally to be carried out in the presence of $CO_2$, but preferably in the absence of $CO_2$, and the temperature peak ("hot spot") which occurs due to the subsequent exothermic chemical reaction and/or a drop in pressure in the reactor then in each case being awaited.

**6.** Process according to claim 5, wherein for the activation

(β3) in a third activation step or further activation steps after the temperature peak reached in the preceding activation step, step (β2) is repeated once to five times, this addition of the part amount or these additions of the part amounts of alkylene oxide being carried out in the absence of $CO_2$.

**7.** Process according to claim 6, wherein for the activation

(β4) in a further activation step or further activation steps, after the temperature peak reached in the preceding activation step, step (β3) is repeated once to five times, this addition of the part amount or these additions of the part amounts of alkylene oxide being carried out in the presence of $CO_2$.

**8.** Process according to claim 7, wherein the particular part amount of one or more alkylene oxides which is employed in the activation in steps β1 to β4 is 2.0 to 15.0 wt.% (based on the total amount of the amount of alkylene oxides employed in the activation and copolymerization).

**9.** Process according to one of claims 1 to 8, wherein the amount of the additives A) employed is from 0.2 to 10.0 [mmol of additive A)] / [mmol of Co].

**10.** Process according to one of claims 2 to 8, wherein the amount of the additive A) employed is from 0.8 to 4.0 [mmol of additive A)] / [mmol of Co] and the amount of the metal salt B) employed is 0.8 to 4.0 [mmol of metal salt B)] / [mmol of Co].

**11.** Process according to one of claims 1 to 9, wherein, in the definition of additive A),

- the phenothiazines are those according to formula (IVb)

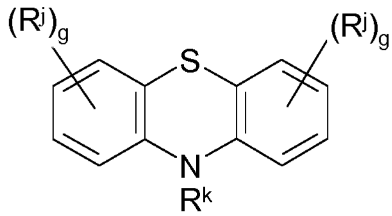

(IVb);

- the benzothiazoles are those according to formula (Vb)

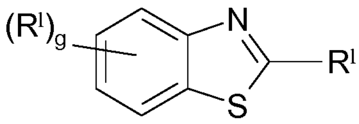

(Vb);

- the phenoxazines are those according to formula (VIb)

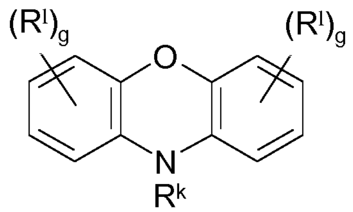

(VIb)

wherein, in the aforementioned formulae,

g = 0, 1 or 2 and
$R^j$ represents an acetamido, amino, bromo, n-butyl, iso-butyl, tert-butyl, chloro, cyano, ethoxy, ethyl, fluoro, iodo, methoxy, methyl, nitro, iso-propyl or n-propyl group,
$R^k$ represents an H or a $C_1$ - $C_{20}$-alkyl group, preferably H or a methyl, ethyl, iso-propyl, n-propyl, n-butyl, iso-butyl, tert-butyl, hexyl, cyclohexyl group,
$R^1$ represents an H, $C_1$-$C_{20}$-alkyl group (for example methyl, ethyl, iso-propyl, n-propyl, n-butyl, iso-butyl, tert-butyl, hexyl, cyclohexyl group), acetamido, amino, bromo, chloro, cyano, ethoxy, ethyl, fluoro, hydroxyl, iodo, methoxy, nitro group, or wherein the thiazole and/or the benzothiazole fragments are linked to one another via disulfide bridges,
and/or

- the nitro styrene is an $\alpha$-nitrostyrene or $\beta$-nitrostyrene.

**12.** Process according to one of claims 1 to 11, wherein the H-functional starter substances employed are chosen from at least one of the group consisting of alcohols, amines, thiols, amino alcohols, thioalcohols, hydroxy esters, polyether polyols, polyester polyols, polyester ether polyols, polycarbonate polyols, polyether carbonate polyols, polyethyleneimines, polyether-amines, polytetrahydrofurans, polyether thiols, polyacrylate polyols, castor oil, the mono- or diglyceride of ricinoleic acid, monoglycerides of fatty acids, and chemically modified mono-, di- and/or triglycerides of fatty acids and $C_1$-$C_{24}$-atkyl fatty acid esters which contain on average at least 2 OH groups per molecule.

**13.** Process according to one of claims 1 to 12, wherein the double metal cyanide catalyst employed contains at least one double metal cyanide compound chosen from the group consisting of zinc hexacyanocobaltate(III), zinc hexacyanoiridate(III), zinc hexacyanoferrate(III) and cobalt(II) hexacyanocobaltate(III).

**14.** Process according to claim 13, wherein the double metal cyanide catalyst employed additionally contains at least one organic complexing ligand chosen from the group consisting of aliphatic ethers, ethanol, isopropanol, n-butanol, iso-butanol, sec-butanol, tert-butanol, 2-methyl-3-buten-2-ol, 2-methyl-3-butyn-2-ol, ethylene glycol mono-tert-butyl ether, diethylene glycol mono-tert-butyl ether, tripropylene glycol monomethyl ether and 3-methyl-3-oxetane-methanol.

**15.** Process according to one of claims 1 to 13, which is carried out in a tube reactor, stirred tank or loop reactor.

## Revendications

**1.** Procédé pour la préparation de polyéthercarbonate-polyols à partir d'une ou de plusieurs substances de départ à fonctionnalité H, d'un ou de plusieurs oxydes d'alkylène et de dioxyde de carbone en présence d'un catalyseur de type cyanure métallique double et en présence d'au moins un additif A), **caractérisé en ce que**

($\alpha$) la substance de départ à fonctionnalité H ou un mélange d'au moins deux substances de départ à fonctionnalité H est disposé(e) au préalable, le catalyseur de type CMD étant ajouté à la substance de départ à fonctionnalité H ou au mélange d'au moins deux substances de départ à fonctionnalité H,
($\beta$) pour l'activation, on ajoute une quantité partielle (par rapport à la quantité totale de la quantité d'oxydes d'alkylène utilisée lors de l'activation et de la copolymérisation) d'un ou de plusieurs oxydes d'alkylène au mélange résultant de l'étape ($\alpha$), cette addition d'une quantité partielle d'oxyde d'alkylène pouvant le cas échéant avoir lieu en présence de $CO_2$, et en attendant ensuite à chaque fois le pic de température et/ou une chute de pression dans le réacteur, survenant en raison de la réaction chimique exothermique qui suit, et l'étape (ß) pour l'activation pouvant également avoir lieu plusieurs fois,
($\gamma$) on ajoute un ou plusieurs oxydes d'alkylène et du dioxyde de carbone au mélange résultant de l'étape (ß) ("copolymérisation"), les oxydes d'alkylène utilisés pour la copolymérisation pouvant être identiques aux ou différents des oxydes d'alkylène utilisés lors de l'activation,

l'additif A) étant ajouté dans l'étape ($\alpha$) à la substance de départ à fonctionnalité H ou au mélange d'au moins deux substances de départ à fonctionnalité H et/ou l'additif A) étant ajouté dans l'étape (ß) à la quantité partielle d'un ou de plusieurs oxydes d'alkylène ajoutée au mélange résultant de l'étape ($\alpha$) et l'additif A) étant au moins un composé choisi dans le groupe constitué par

- les phénols stériquement encombrés selon la formule (II)

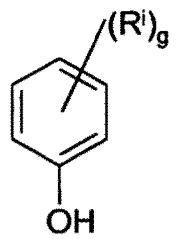

(II),

dans laquelle

g = 1 ou 2, et
$R^1$ représente un groupe amino, bromo, chloro, cyano, iodo, méthoxy, méthyle ou nitro ;

- les catéchols selon la formule (IIIa) et les pyrocatéchols selon la formule

(IIIb),

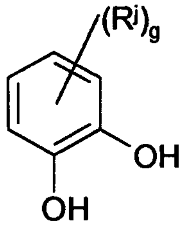

(IIIa)

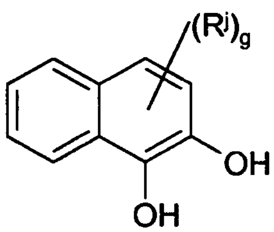

(IIIb)

dans laquelle

g présente la signification susmentionnée et
$R^j$ représente un groupe acétamido, amino, bromo, n-butyle, iso-butyle, tert-butyle, chloro, cyano, éthoxy, éthyle, fluoro, iodo, méthoxy, méthyle, nitro, iso-propyle ou n-propyle ;

- les phénothiazines,
- les benzothiazoles,
- les phénoxazines,
- le 2,2,6,6,-tétraméthylpipéridin-1-oxyle et
- les nitrostyrènes.

2. Procédé selon la revendication 1, la préparation étant réalisée en présence d'un catalyseur de type CMD et en présence d'au moins un additif A) ainsi qu'en présence d'au moins un sel métallique B), **caractérisé en ce que** l'additif A) est ajouté dans l'étape (α) à la substance de départ à fonctionnalité H ou au mélange d'au moins deux substances de départ à fonctionnalité H et/ou l'additif A) est ajouté dans l'étape (ß) à la quantité partielle d'un ou de plusieurs oxydes d'alkylène ajoutée au mélange résultant de l'étape (α),
le sel métallique B) étant ajouté dans l'étape (α) à la substance de départ à fonctionnalité H ou au mélange d'au moins deux substances de départ à fonctionnalité H,
au moins un composé choisi dans le groupe constitué par les halogénures de métal alcalino-terreux, les carboxylates de métal alcalino-terreux ou les carboxylates d'aluminium étant utilisé comme sel métallique B).

3. Procédé selon la revendication 2, du 4-dinitrophénol et/ou du 2,4-dinitrophénol étant utilisé(s) comme additif A) et au moins un composé choisi dans le groupe constitué par l'acétate de magnésium, l'acétate de calcium, le stéarate de magnésium, le stéarate de calcium et le stéarate d'aluminium étant utilisé comme sel métallique B).

4. Procédé selon l'une quelconque des revendications 1 à 3, **caractérisé en ce que**, dans l'étape (α), on dispose au préalable la substance de départ à fonctionnalité H ou un mélange d'au moins deux substances de départ à fonctionnalité H et on élimine l'eau par une température augmentée et/ou une pression réduite ("séchage"), le catalyseur de type CMD, l'additif A) et le cas échéant le sel métallique B) étant ajoutés à la substance de départ à fonctionnalité H ou au mélange d'au moins deux substances de départ à fonctionnalité H avant ou après le séchage.

5. Procédé selon l'une quelconque des revendications 1 à 4, où, pour l'activation selon l'étape ß)

(ß1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape (α), cette addition de la quantité partielle d'oxyde d'alkylène pouvant le cas échéant avoir lieu en présence de $CO_2$, de préférence cependant en l'absence de $CO_2$, et en attendant ensuite à chaque fois le pic de température ("hotspot") et/ou une chute de pression dans le réacteur,

survenant en raison de la réaction chimique exothermique qui suit,
(ß2) dans une deuxième étape d'activation, après le pic de température atteint dans l'étape d'activation préalable, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation préalable, cette addition de la quantité partielle d'oxyde d'alkylène pouvant le cas échéant avoir lieu en présence de $CO_2$, de préférence cependant en l'absence de $CO_2$, et en attendant ensuite à chaque fois le pic de température ("hotspot") et/ou une chute de pression dans le réacteur, survenant en raison de la réaction chimique exothermique qui suit.

**6.** Procédé selon la revendication 5, où, pour l'activation (ß3) dans une troisième étape d'activation ou d'autres étapes d'activation après le pic de température atteint dans l'étape d'activation précédente, l'étape (ß2) est répétée une à cinq fois, cette addition de la quantité partielle ou ces additions des quantités partielles d'oxyde d'alkylène ayant lieu en l'absence de $CO_2$.

**7.** Procédé selon la revendication 6, où, pour l'activation (ß4) dans une autre étape d'activation ou d'autres étapes d'activation après le pic de température atteint dans l'étape d'activation précédente, l'étape (ß3) est répétée une à cinq fois, cette addition de la quantité partielle ou ces additions des quantités partielles d'oxyde d'alkylène ayant lieu en présence de $CO_2$.

**8.** Procédé selon la revendication 7, la quantité partielle à chaque fois utilisée lors de l'activation dans les étapes ß1 à ß4 d'un ou de plusieurs oxydes d'alkylène représentant 2,0 à 15,0% en poids (par rapport à la quantité totale de la quantité d'oxydes d'alkylène utilisée lors de l'activation et de la copolymérisation).

**9.** Procédé selon l'une quelconque des revendications 1 à 8, la quantité de l'additif A) utilisé étant de 0,2 à 10,0 [mmoles d'additif A)]/[mmole de Co].

**10.** Procédé selon l'une quelconque des revendications 2 à 8, la quantité de l'additif A) utilisé étant de 0,8 à 4,0 [mmoles d'additif A)]/[mmole de Co] et la quantité du sel métallique B) utilisé étant de 0,8 à 4,0 [mmoles de sel métallique B)]/[mmole de Co].

**11.** Procédé selon l'une quelconque des revendications 1 à 9, où, dans la définition de l'additif A)

- les phénothiazines sont celles selon la formule (IVb)

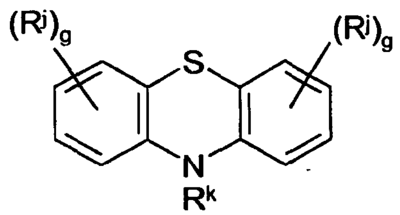

(IVb);

- les benzothiazoles sont ceux selon la formule (Vb)

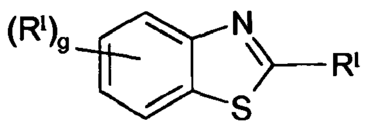

(Vb);

- les phénoxazines sont celles selon la formule (VIb)

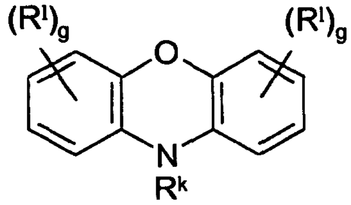

(VIb)

où, dans les formules susmentionnées

g = 0, 1 ou 2 et
$R^j$ représente un groupe acétamido, amino, bromo, n-butyle, iso-butyle, tert-butyle, chloro, cyano, éthoxy, éthyle, fluoro, iodo, méthoxy, méthyle, nitro, iso-propyle ou n-propyle,
$R^k$ représente H ou un groupe $C_1$-$C_{20}$-alkyle, de préférence H ou un groupe méthyle, éthyle, iso-propyle, n-propyle, n-butyle, iso-butyle, tert-butyle, hexyle, cyclohexyle,
$R^1$ représente H, un groupe $C_1$-$C_{20}$-alkyle (par exemple un groupe méthyle, éthyle, iso-propyle, n-propyle, n-butyle, iso-butyle, tert-butyle, hexyle, cyclohexyle), acétamido, amino, bromo, chloro, cyano, éthoxy, éthyle, fluoro, hydroxy, iodo, méthoxy, nitro ou les fragments thiazole et/ou benzothiazole étant liés les uns aux autres par des ponts disulfure,
et/ou

- le nitrostyrène est un $\alpha$-nitrostyrène ou un ß-nitrostyrène.

**12.** Procédé selon l'une quelconque des revendications 1 à 11, les substances de départ à fonctionnalité H utilisées étant choisies parmi au moins un des groupes constitués par les alcools, les amines, les thiols, les aminoalcools, les thioalcools, les hydroxyesters, les polyétherpolyols, les polyesterpolyols, les polyesterétherpolyols, les polycarbonate-polyols, les polyéthercarbonate-polyols, les polyéthylène-imines, les polyétheramines, les polytétrahydrofurannes, les polyétherthiols, les polyacrylate-polyols, l'huile de ricin, le monoglycéride ou le diglycéride de l'acide ricinoléique, les monoglycérides d'acides gras, les monoglycérides, diglycérides et/ou triglycérides chimiquement modifiés d'acides gras et les esters $C_1$-$C_{24}$-alkyliques d'acides gras qui contiennent en moyenne au moins 2 groupes OH par molécule.

**13.** Procédé selon l'une quelconque des revendications 1 à 12, le catalyseur de type cyanure métallique double utilisé contenant au moins un composé de type cyanure métallique double choisi dans le groupe constitué par l'hexacyanocobaltate (III) de zinc, l'hexacyano-iridate (III) de zinc, l'hexacyanoferrate (III) de zinc et l'hexacyanocobaltate (III) de cobalt (II).

**14.** Procédé selon la revendication 13, le catalyseur de type cyanure métallique double utilisé contenant en plus au moins un ligand complexe organique, choisi dans le groupe constitué par les éthers aliphatiques, l'éthanol, l'isopropanol, le n-butanol, l'iso-butanol, le sec-butanol, le tert-butanol, le 2-méthyl-3-butén-2-ol, le 2-méthyl-3-butyn-2-ol, l'éthylèneglycolmonotert-butyléther, le diéthylèneglycolmonotert-butyléther, le tripropylèneglycolmonométhyléther et le 3-méthyl-3-oxétaneméthanol.

**15.** Procédé selon l'une quelconque des revendications 1 à 13, qui est réalisé dans un réacteur tubulaire, une cuve agitée ou un réacteur à boucle à circulation interne.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4500704 A
- WO 2004087788 A
- WO 2004081082 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220